# EUROPÄISCHE PATENTSCHRIFT

(11) **EP 2 990 825 B1**
(45) Veröffentlichungstag und Bekanntmachung des Hinweises auf die Patenterteilung: **06.11.2019**
(21) Anmeldenummer: 15180344.2
(22) Anmeldetag: 10.08.2015
(51) Int. Cl.: G01S 15/88, G01S 15/08, G01S 15/02, F24C 7/08, A47L 15/42, D06F 58/28, D06F 39/00, G05B 15/00, G05B 19/042, G06F 3/01

(54) **VERFAHREN UND VORRICHTUNG ZUM STEUERN EINES HAUSHALTSGERÄTS SOWIE HAUSHALTSGERÄT**
METHOD AND DEVICE FOR CONTROLLING A DOMESTIC APPLIANCE AND DOMESTIC APPLIANCE
PROCEDE ET DISPOSITIF DE COMMANDE D'UN APPAREIL MENAGER ET APPAREIL MENAGER

(30) Priorität: 26.08.2014 DE 102014112169
(43) Veröffentlichungstag der Anmeldung: 02.03.2016
(73) Patentinhaber: Miele & Cie. KG, 33332 Gütersloh (DE)
(72) Erfinder: Stahl, Matthias, 33813 Oerlinghausen (DE)

(56) Entgegenhaltungen:
- EP-A2- 2 314 427
- DE-A1- 10 256 464
- DE-A1-102010 006 697
- DE-A1-102013 208 581

## Beschreibung

Die Erfindung betrifft ein Verfahren und eine Vorrichtung zum Steuern eines Haushaltsgeräts sowie ein Haushaltsgerät.

Eine Funktion eines Haushaltsgeräts kann durch einen Nutzer gesteuert werden, indem der Nutzer ein Bedienelement des Haushaltsgeräts berührt.

Die EP 2 615 376 A1 offenbart ein Verfahren zum Bedienen eines Kochfelds sowie ein Kochfeld.

Die DE 10 2013 208 581 A1 offenbart ein Bedienverfahren und eine Bedienvorrichtung für ein Elektrogerät mit einer Bediensensorik mit mindestens zwei Abstandssensoren in einer Reihe, die den Abstand einer vor die Abstandssensoren gehaltenen Hand erkennen können.

Es ist die Aufgabe der vorliegenden Erfindung, ein verbessertes Verfahren und eine verbesserte Vorrichtung zum Steuern eines Haushaltsgeräts sowie ein verbessertes Haushaltsgerät zu schaffen.

Erfindungsgemäß wird diese Aufgabe durch ein Verfahren und eine Vorrichtung zum Steuern eines Haushaltsgeräts sowie durch ein Haushaltsgerät gemäß den Hauptansprüchen gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen in einer berührungslosen Interaktion zwischen Gerät und Nutzer.

Ein Verfahren zum Steuern eines Haushaltsgeräts umfasst die folgenden Schritte:
Einlesen eines Bewegungssignals und eines Abstandssignals, wobei das Bewegungssignal eine unter Verwendung eines ersten Sensors erfasste Bewegung eines Nutzers des Haushaltsgeräts und das Abstandssignal einen unter Verwendung eines zweiten Sensors erfassten Abstand zwischen dem Nutzer und dem Haushaltsgerät repräsentiert; und
Bestimmen eines Steuersignals zum Steuern einer Funktion des Haushaltsgeräts unter Verwendung des Bewegungssignals und des Abstandssignals.

Bei dem Haushaltsgerät kann es sich beispielsweise um einen Backofen, einen Herd, eine Waschmaschine, einen Trockner, einen Staubsauger, eine Dunstabzugshaube oder ein anderes im Haushalt oder im gewerblichen Bereich einsetzbares elektrisch betriebenes Gerät handeln. Bei dem Nutzer kann es sich um eine Person handeln, die das Haushaltsgerät bedient. Bei dem Steuersignal kann es sich um ein elektrisches Signal handeln, das geeignet ist, um die Funktion des Haushaltsgeräts zu aktivieren oder zu deaktivieren. Durch den Einsatz von zwei separaten Sensoren können die Bewegung und der Abstand sehr genau bestimmt werden. Dabei können unterschiedliche Sensoren eingesetzt werden. Beispielsweise kann ein Sensor eingesetzt werden, der ausgebildet ist, um ein Signal auszusenden und anhand eines reflektierten Signals den Abstand und/oder die Bewegung zu erfassen oder es kann ein Sensor eingesetzt werden, der keine Sendeeinheit aufweist und ausgebildet ist, um den Abstand und/oder die Bewegung unter Verwendung eines von dem Nutzer abgestrahlten Signals zu erfassen.

Das Verfahren umfasst einen Schritt des Erfassens der Bewegung des Nutzers unter Verwendung des ersten Sensors und einen Schritt des Bereitstellens des die Bewegung repräsentierenden Bewegungssignals. Beispielsweise kann das Bewegungssignal eine Geschwindigkeit, eine Richtung oder ein Ausmaß der Bewegung des Nutzers oder beispielsweise eines Körperglieds des Nutzers abbilden. Ferner umfasst das Verfahren einen Schritt des Erfassens des Abstands zwischen dem Nutzer und dem Haushaltsgerät unter Verwendung des zweiten Sensors und einen Schritt des Bereitstellens des den Abstand repräsentierenden Abstandssignals. Beispielsweise kann das Abstandssignal den Abstand über einen absoluten Abstandswert, beispielsweise in Metern, oder über vordefinierte Abstandsintervalle, beispielsweise nah, entfernt, weit entfernt, abbilden. Die Erfassung der Bewegung und des Abstands ermöglicht eine sehr genaue Detektion des Verhaltens des Nutzers. Ferner ist es möglich, das Zeitverhalten der erfassten Signale einer Plausibilitätsprüfung zuzuführen, um anhand des Zeitverhaltens signifikante Bewegungsmuster zu erkennen, um daraus dem erkannten Bewegungsmuster zugeordnete Funktionen im Haushaltgerät zu aktivieren oder zu deaktivieren. Insgesamt ist mit Hilfe der Beurteilung des Zeitverhaltens der Sensorsignale in Kombination mit der Geschwindigkeit und Richtung der Bewegung des Benutzers die Bedienabsicht extrem zuverlässig zu erkennen, sodass Fehlaktivitäten des Gerätes oder Fehlinterpretationen hinsichtlich der Kommandos nicht vorkommen. Die Beurteilung des Zeitverhaltens ist dabei als zusätzliche Option für alle genannten Ausführungen des Verfahrens und der Vorrichtung verwendbar.

Gemäß der Erfindung wird der Schritt des Erfassens des Abstands ansprechend auf den Schritt des Bereitstellens des die Bewegung repräsentierenden Bewegungssignals durchgeführt. Auf diese Weise ist es ausreichend, eine Messung zum Erfassen des Abstands erst dann oder nur dann durchzuführen, wenn eine Bewegung des Nutzers erkannt wurde.

Dabei umfasst das Verfahren einen Schritt des Aktivierens des zweiten Sensors ansprechend auf eine im Schritt des Erfassens der Bewegung des Nutzers erfasste Bewegung. Dabei kann es sich bei der erfassten Bewegung um eine Bewegung handeln, die dem Nutzer zugeordnet werden kann. Beispielsweise kann der Schritt des Aktivierens ansprechend auf den Schritt des Bereitstellens des die Bewegung repräsentierenden Bewegungssignals durchgeführt werden. Auf diese Weise ist es nicht erforderlich, dass der zweite Sensor dauerhaft aktiv ist. Dadurch kann Energie gespart werden.

Beispielsweise kann im Schritt des Erfassens der Bewegung eine Infrarotmessung zum Erfassen der Bewegung durchgeführt werden. Im Schritt des Erfassens des Abstands kann eine Ultraschallmessung zum Erfassen des Abstands durchgeführt werden. Vorteilhafterweise kann die Bewegung auf diese Weise sehr energiesparend erfasst werden.

Im Schritt des Bestimmens kann eine Auswertung von Bewegungsdaten des Bewegungssignals und Abstandsdaten des Abstandssignals durchgeführt werden. Das Steuersignal kann unter Verwendung eines Ergebnisses der Auswertung durchgeführt werden. Die Auswertung kann unter Verwendung bekannter Auswerteverfahren, beispielsweise unter Verwendung von Vergleichen mit Schwellenwerten, Vergleichsmustern oder einer geeigneten Auswertelogik durchgeführt werden.

Im Schritt des Bestimmens kann das Steuersignal bestimmt werden, um einen Betriebszustand, eine Beleuchtung, einen Geräteton und/oder einen Schließmechanismus des Haushaltsgeräts zu steuern. Somit können auch Funktionen unterschiedlicher Art durch eine erfasste Bewegung und einen erfassten Abstand des Nutzers gesteuert werden.

Eine Vorrichtung zum Steuern eines Haushaltsgeräts weist die folgenden Merkmale auf:
eine Einleseeinrichtung zum Einlesen eines Bewegungssignals und eines Abstandssignals, wobei das Bewegungssignal eine unter Verwendung eines ersten Sensors erfasste Bewegung eines Nutzers des Haushaltsgeräts und das Abstandssignal einen unter Verwendung eines zweiten Sensors erfassten Abstand zwischen dem Nutzer und dem Haushaltsgerät repräsentiert; und
eine Bestimmungseinrichtung zum Bestimmen eines Steuersignals zum Steuern einer Funktion des Haushaltsgeräts unter Verwendung des Bewegungssignals und des Abstandssignals.

Die Vorrichtung ist ausgebildet, um die Schritte des genannten Verfahrens in geeigneten Einrichtungen umzusetzen. Die Vorrichtung kann als ein Steuergerät in das Haushaltsgerät integriert werden.

Gemäß einer Ausführungsform umfasst ein solches Haushaltsgerät somit die genannte Vorrichtung zum Steuern des Haushaltsgeräts.

Ein Ausführungsbeispiel der Erfindung ist in den Zeichnungen rein schematisch dargestellt und wird nachfolgend näher beschrieben. Es zeigt
- Figur 1: eine Darstellung eines Haushaltsgeräts;
- Figur 2: eine Darstellung eines Haushaltsgeräts mit einer Vorrichtung zum Steuern eines Haushaltsgeräts;
- Figur 3: eine Darstellung einer Vorrichtung zum Steuern eines Haushaltsgeräts;
- Figuren 4 bis 6: Darstellungen zum Steuern eines Haushaltsgeräts; und
- Figur 7: ein Ablaufdiagramm eines Verfahrens zum Steuern eines Haushaltsgeräts.

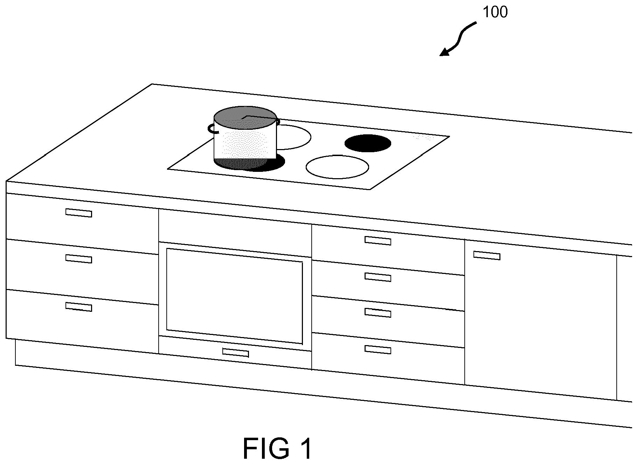

Fig. 1 zeigt eine Darstellung eines Haushaltsgeräts 100 gemäß einem Ausführungsbeispiel der vorliegenden Erfindung. Das Haushaltsgerät 100 stellt eine Kombination aus einem Herd und einem Backofen dar, die in eine Küchenzeile eingebaut ist. Der Herd weist ein Kochfeld auf, das in eine Arbeitsplatte der Küchenzeile integriert ist. Der Backofen ist unter dem Herd und zwischen Schubladen angeordnet.

Das in Fig. 1 gezeigte Haushaltsgerät 100 ist lediglich beispielhaft gewählt. Der beschriebene Ansatz eignet sich in entsprechender Weise zur Anwendung im Zusammenhang mit anderen Haushaltsgeräten, wie beispielsweise einer Waschmaschine, einem Wäschetrockner, einer Geschirrspülmaschine, einem Staubsauger oder einer Dunstabzugshaube.

Das gezeigte Haushaltsgerät 100 ist ausgebildet um eine Mehrzahl von Funktionen auszuführen. Eine Funktion kann beispielsweise ein Erhitzen eines Kochfelds entsprechend einer von einem Nutzer auswählbaren Kochstufe darstellen. Das Haushaltsgerät 100 weist eine Vorrichtung auf, die ausgebildet ist, um zumindest eine Funktion des Haushaltsgeräts 100 unter Verwendung von Signalen von Umfeldsensoren zu steuern.

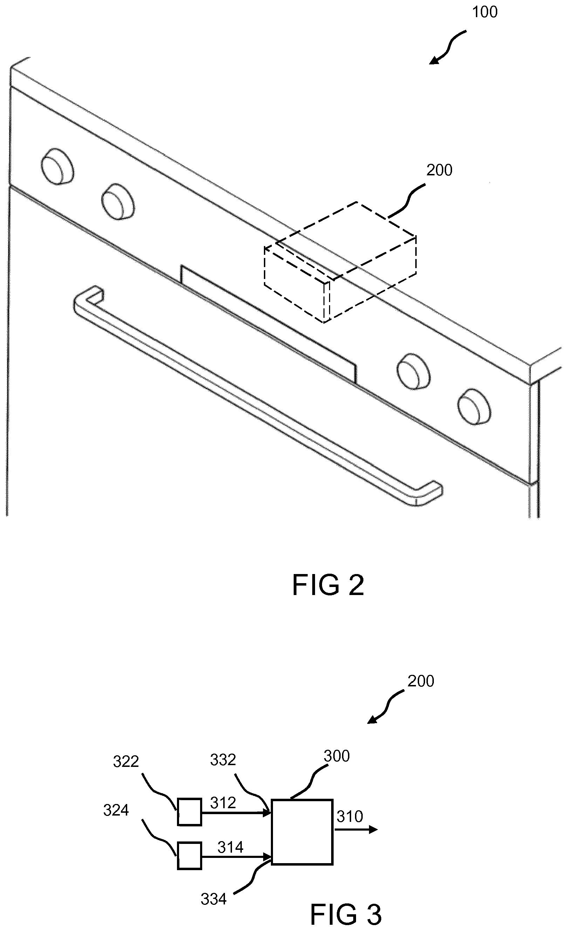

Fig. 2 zeigt eine Darstellung eines Haushaltsgeräts 100 mit einer Vorrichtung 200 zum Steuern des Haushaltsgeräts 100 gemäß einem Ausführungsbeispiel der vorliegenden Erfindung. Bei dem Haushaltsgerät 100 kann es sich um das anhand von Fig. 1 beschriebene Haushaltsgerät 100 handeln. Die Vorrichtung 200 ist als ein elektrisches Gerät in dem Haushaltsgerät 100 integriert. Die Vorrichtung 200 ist ausgebildet, um ein Steuersignal an zumindest eine Funktionseinheit des Haushaltsgeräts 100 bereitzustellen, um zumindest eine Funktion des Haushaltsgeräts 100 zu steuern.

Fig. 3 zeigt eine Darstellung einer Vorrichtung 200 zum zum Steuern eines Haushaltsgeräts gemäß einem Ausführungsbeispiel der vorliegenden Erfindung. Bei der Vorrichtung 200 kann es sich um die in Fig. 2 gezeigte Vorrichtung handeln.

Die Vorrichtung 200 weist eine Bestimmungseinrichtung 300 auf, die ausgebildet ist, um ein Steuersignal 310 zum Steuern einer Funktion des Haushaltsgeräts unter Verwendung eines Bewegungssignals 312 und eines Abstandssignals 314 zu bestimmen. Das Bewegungssignal 312 repräsentiert ein Signal, das von einem ersten Sensor 322 erfasst wurde und eine Bewegung eines sich im Umfeld des Haushaltsgeräts befindlichen Nutzers abbildet. Das Abstandssignal 314 repräsentiert ein Signal, das von einem zweiten Sensor 324 erfasst wurde und einen Abstand zu einem sich im Umfeld des Haushaltsgeräts befindlichen Nutzers abbildet. Die Bestimmungseinrichtung 300 ist ausgebildet, um das Bewegungssignal 312 und das Abstandssignal 314 auszuwerten und basierend auf einem Ergebnis der Auswertung das Steuersignal 310 so zu bestimmen, dass das Steuersignal 310 geeignet ist, um eine dem Bewegungssignal 312 und dem Abstandssignal 314 zuordenbare Funktion des Haushaltsgeräts zu steuern. Gemäß diesem Ausführungsbeispiel ist die Bestimmungseinrichtung 300 ausgebildet, um das Steuersignal 310 an eine Ausgangsschnittstelle der Vorrichtung 200 auszugeben, beispielsweise an eine Funktionseinheit zur Durchführung der Funktion.

Die Vorrichtung 200 weist eine Einleseeinrichtung zum Einlesen des Bewegungssignals 312 und des Abstandssignals 314 auf. Gemäß diesem Ausführungsbeispiel ist die Einleseeinrichtung durch Eingangsschnittstellen 332, 334 der Bestimmungseinrichtung realisiert. Über die Eingangsschnittstellen 332, 334 können über das Bewegungssignal 312 übertragene Bewegungsdaten und über das Abstandssignal 314 übertragene Abstandsdaten empfangen und unter Verwendung einer geeigneten Bestimmungsvorschrift zur Bestimmung des Steuersignals 310 verwendet werden. Gemäß einem Ausführungsbeispiel sind unterschiedlichen Kombinationen aus Bewegungsdaten und Abstandsdaten unterschiedliche Funktionen des Haushaltsgeräts und somit unterschiedliche Steuersignale 310 zugeordnet.

Unter Verwendung des Steuersignals 310 können beispielsweise Parameter zum Steuern einer Funktion des Haushaltsgeräts oder Schaltungszustände einer Schaltung zum Steuern der Funktion des Haushaltsgeräts eingestellt werden. Beispielsweise kann als die Funktion eine Beleuchtung des Haushaltsgeräts ein- oder ausgeschaltet oder in ihrer Helligkeit verändert werden, eine akustische Signalquelle des Haushaltsgeräts ein- oder ausgeschaltet oder in ihrer Lautstärke verändert werden, ein Betriebszustand des Haushaltsgeräts verändert werden, eine Anzeige des Haushaltsgeräts ein- oder ausgeschaltet werden oder eine Mechanik, beispielsweise eine Verriegelung oder Entriegelung, des Haushaltsgeräts betätigt werden.

Optional umfasst die Vorrichtung 200 den ersten Sensor 322 und den zweiten Sensor 324. Der erste Sensor 322 ist ausgebildet, um eine Bewegung eines sich in einem Erfassungsbereich des ersten Sensors 322 befindliche Bewegung eines Nutzers, beispielsweise eine Fortbewegung des Nutzers oder eine Handbewegung des Nutzers, zu erfassen und das die Bewegung abbildende Bewegungssignal 312 bereitzustellen. Der zweite Sensor 324 ist ausgebildet, um einen Abstand zu einem sich in einem Erfassungsbereich des zweiten Sensors 324 befindlichen Nutzers zu erfassen und das den Abstand abbildende Abstandssignal 314 bereitzustellen.

Gemäß einem Ausführungsbeispiel ist der erste Sensor 322 ausgebildet, um den dem ersten Sensor 322 zugeordneten Erfassungsbereich fortlaufend zu überwachen. Der zweite Sensor 324 ist gemäß diesem Ausführungsbeispiel ausgebildet, um den dem zweiten Sensor 324 zugeordneten Erfassungsbereich nur dann zu überwachen, wenn von dem ersten Sensor 322 eine Bewegung des Nutzers detektiert wird oder detektiert wurde. Beispielsweise kann sich der zweite Sensor 324 in einem Ruhemodus befinden und ansprechend auf eine von dem ersten Sensor 322 erfasste Bewegung aus dem Ruhemodus in einen Bereitschaftsmodus versetzt werden, um eine Abstandsmessung zum Erfassen des Abstands zu dem Nutzer durchzuführen. Nach der Abstandsmessung kann der zweite Sensor 324 wieder in den Ruhemodus versetzt werden, bis eine erneute Bewegung durch den ersten Sensor 322 detektiert wird. Zum Aktiveren des zweiten Sensors 324 kann beispielsweise ansprechend auf eine Erfassung einer Bewegung durch den ersten Sensor 322 ein Aktivierungssignal von dem ersten Sensor 322 oder von der Bestimmungseinrichtung 300 an den zweiten Sensor 324 bereitgestellt werden.

Gemäß diesem Ausführungsbeispiel ist der erste Sensor 322 als ein Infrarotsensor und der zweite Sensor 324 als ein Ultraschallsensor ausgeführt. Beispielsweise ist der zweite Sensor 324 ausgebildet, um ansprechend auf eine von dem ersten Sensor 322 erfasste Bewegung ein Ultraschallsignal auszusenden und ein reflektiertes Ultraschallsignal zu empfangen.

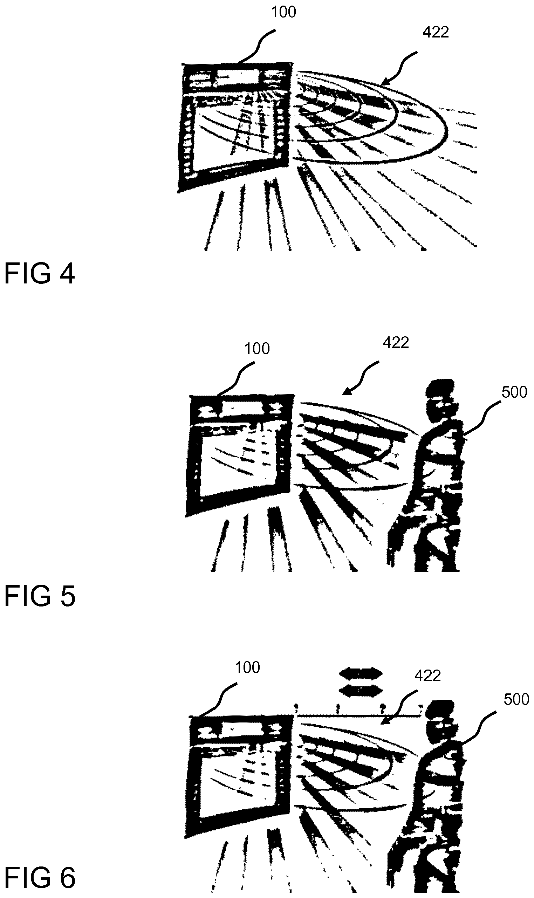

Fig. 4 zeigt eine Darstellung eines Haushaltsgeräts 100 gemäß einem Ausführungsbeispiel der vorliegenden Erfindung. Das Haushaltsgerät 100 weist eine Vorrichtung zum Steuern des Haushaltsgeräts 100 auf, wie sie beispielsweise anhand von Fig. 3 beschrieben ist. Die Vorrichtung umfasst einen ersten Sensor zum Erfassen einer Bewegung in einem Erfassungsbereich 422 des ersten Sensors. Alternativ ist die Vorrichtung über eine Schnittstelle mit einem entsprechenden ersten Sensor gekoppelt. Der erste Erfassungsbereich 422 erstreckt sich gemäß diesem Ausführungsbeispiel über ein Vorfeld des Haushaltsgeräts 100. Innerhalb des Erfassungsbereichs 422 befindet sich kein Nutzer.

Fig. 5 zeigt eine Darstellung des anhand von Fig. 4 beschriebenen Haushaltsgeräts 100 gemäß einem Ausführungsbeispiel der vorliegenden Erfindung. Ein Nutzer 500 nähert sich dem Haushaltsgerät 100 und dringt dabei in den Erfassungsbereich 422 ein. Dadurch wird die Bewegung des Nutzers 500, in diesem Fall die Annäherung des Nutzers 500 an das Haushaltsgerät 100, erkannt und es wird von dem ersten Sensor ein die Bewegung des Nutzers 500 anzeigendes Bewegungssignal bereitgestellt.

Ansprechend auf das Erkennen der Bewegung des Nutzers 500 wird von einem zweiten Sensor, der von der Vorrichtung umfasst ist, oder mit dem die Vorrichtung gekoppelt ist, eine Abstandsmessung durchgeführt, um einen Abstand zwischen dem Nutzer 500 und dem Haushaltsgerät 100 zu erfassen. Gemäß diesem Ausführungsbeispiel befindet sich der der Nutzer 500 beispielsweise in einer Entfernung von 15 Metern zu dem Haushaltsgerät. Alternativ kann der Erfassungsbereich 422 eine andere maximale Ausdehnung, beispielsweise von 2 Metern, 3 Metern oder 5 Metern aufweisen. Die maximale Ausdehnung des Erfassungsbereichs 422 kann einstellbar sein, um den Erfassungsbereich 422 beispielsweise an eine Raumgröße eines Raums anzupassen, in dem das Haushaltsgerät 100 angeordnet ist.

Fig. 6 zeigt eine Darstellung des anhand von Fig. 5 beschriebenen Haushaltsgeräts 100 gemäß einem Ausführungsbeispiel der vorliegenden Erfindung. Es wurde sowohl eine Bewegung des Nutzers 500 als auch der Abstand zu dem Nutzer 500 erfasst. Unter Verwendung der erfassten Bewegung und des erfassten Abstands wird eine Funktion des Haushaltsgeräts 100, beispielsweise gesteuert durch ein von der Vorrichtung bereitgestelltes Steuersignal, eingestellt. Gemäß diesem Ausführungsbeispiel wird als die Funktion eine Helligkeit einer Beleuchtung des Haushaltsgeräts 100 und zusätzlich oder alternativ eine Lautstärke eines Lautsprechers des Haushaltsgeräts 100 gesteuert. Beispielsweise können die Helligkeit und die Lautstärke verringert werden, wenn der Abstand zwischen dem Haushaltsgerät 100 und dem Nutzer 500 kleiner als ein Abstandsschwellenwert ist und erhöht werden, wenn der Abstand größer als der Abstandsschwellenwert ist.

Im Folgenden werden anhand der vorangegangenen Figuren Ausführungsbeispiele der vorliegenden Erfindung detailliert beschrieben.

Der beschriebene Ansatz ermöglicht eine Sensierung der Annäherung eines Nutzers 500 an das Gerät 100. Durch Einsatz der Sensoren 322, 324 ist eine berührungslose Interaktion zwischen Gerät 100 und Nutzer 500 möglich. Dazu ist das Gerät 100 ausgebildet, um auf die Anwesenheit eines Nutzers 500 zu reagieren und den Abstand des Nutzers 500 zum Gerät 100 zu messen.

Gemäß einem Ausführungsbeispiel ist ein IR-Sensor 322 vorgesehen, der ausgebildet ist, um eine Bewegung und eine Bewegungsrichtung zu detektieren und zeitgleich einen Ultraschall-Sensor 324 zu aktiveren. Der Ultraschall-Sensor 324 ist ausgebildet, um dann den Abstand z.B. eines Nutzers 500 zum Gerät 100 zu messen. Diese Konfiguration ist in der Literatur als Doppelradar bekannt. Auch kann eine auf dem Prinzip des Doppler-Radars basierende Logik eingesetzt werden. Mit Bewegungs-und Abstandsmessung werden Parameter und/oder Schaltungszustände der Geräteelektronik des Geräts 100 in Abhängigkeit der dynamischen Sensordaten direkt angesteuert und entsprechend der vorherigen Kalibrierung der Sensoren 322, 324 verändert.

Gemäß einem Ausführungsbeispiel detektiert der IR-Sensor 322 eine Bewegung im Raum und der Ultraschallsensor 324 misst den Abstand zum Objekt, beispielsweise zu dem Nutzer 500.

Der beschriebene Ansatz ermöglicht eine berührungslose Mensch-Maschine Kommunikation wie beispielsweise ein berührungsloses Wecken des Geräts 100 aus dem Stand By, eine Steuerung einer Gerätebeleuchtung, z.B. CVA (An/Aus, Helligkeit), eine Steuerung Garraum/Trommelbeleuchtung BO, MW, WA etc. (An/Aus, Helligkeit), eine Steuerung der Gerätetöne (Laut, Leise), eine Steuerung Displayhelligkeit (Nah=hell, Entfernt = dunkel, bzw. Stand by), eine vollständige Steuerung einer Dunstabzugshaube, eine Türöffnung durch Annäherung (Heißgeräte, Wäschpflegegeräte) und/oder Ein/Aus Staubsauger.

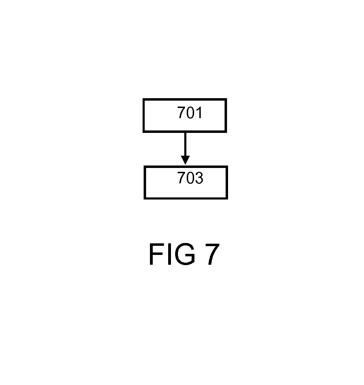

Fig. 7 zeigt ein Ablaufdiagramm eines Verfahrens zum Steuern eines Haushaltsgeräts. Das Verfahren kann beispielsweise unter Verwendung einer im Vorangegangenen beschriebenen Vorrichtung zum Steuern eines Haushaltsgeräts ausgeführt werden.

In einem Schritt 701 werden ein Bewegungssignal und ein Abstandssignal eingelesen, beispielsweise über eine Schnittstelle zu einem ersten Sensor zum Erfassen einer Bewegung eines Nutzers des Haushaltsgeräts und zu einem zweiten Sensor zum Erfassen eines Abstands zwischen dem Nutzer und dem Haushaltsgerät. In einem Schritt 703 wird unter Verwendung des Bewegungssignals und des Abstandssignals ein Steuersignal zum Steuern einer Funktion des Haushaltsgeräts bestimmt.

## Patentansprüche

1. Verfahren zum Steuern eines Haushaltsgeräts (100), wobei das Verfahren die folgenden Schritte umfasst:
Einlesen (701) eines Bewegungssignals (312) und eines Abstandssignals (314), wobei das Bewegungssignal (312) eine unter Verwendung eines ersten Sensors (322) erfasste Bewegung eines Nutzers (500) des Haushaltsgeräts (100) und das Abstandssignal (314) einen unter Verwendung eines zweiten Sensors (324) erfassten Abstand zwischen dem Nutzer (500) und dem Haushaltsgerät (100) repräsentiert;
Bestimmen (703) eines Steuersignals (310) zum Steuern einer Funktion des Haushaltsgeräts (100) unter Verwendung des Bewegungssignals (312) und des Abstandssignals (314); und
Erfassen der Bewegung des Nutzers (500) unter Verwendung des ersten Sensors (322) und einem Schritt des Bereitstellens des die Bewegung repräsentierenden Bewegungssignals (312), sowie mit einem Schritt des Erfassens des Abstands zwischen dem Nutzer (500) und dem Haushaltsgerät (100) unter Verwendung des zweiten Sensors (324) und einem Schritt des Bereitstellens des den Abstand repräsentierenden Abstandssignals (314);
**gekennzeichnet durch**
Aktivieren des zweiten Sensors (324) ansprechend auf eine im Schritt des Erfassens der Bewegung des Nutzers (500) erfasste Bewegung.

2. Verfahren gemäß Anspruch 1, bei dem der Schritt des Erfassens des Abstands ansprechend auf den Schritt des Bereitstellens des die Bewegung repräsentierenden Bewegungssignals (312) durchgeführt wird.

3. Verfahren gemäß einem der vorangegangenen Ansprüche, bei dem im Schritt des Erfassens der Bewegung eine Infrarotmessung zum Erfassen der Bewegung, und im Schritt des Erfassens des Abstands eine Ultraschallmessung zum Erfassen des Abstands durchgeführt wird.

4. Verfahren gemäß einem der vorangegangenen Ansprüche, bei dem im Schritt des Bestimmens eine Auswertung von Bewegungsdaten des Bewegungssignals (312) und Abstandsdaten des Abstandssignals (314) durchgeführt wird und das Steuersignal (310) unter Verwendung eines Ergebnisses der Auswertung bestimmt wird.

5. Verfahren gemäß einem der vorangegangenen Ansprüche, bei dem im Schritt des Bestimmens das Steuersignal (310) bestimmt wird, um einen Betriebszustand, eine Beleuchtung, einen Geräteton und/oder einen Schließmechanismus des Haushaltsgeräts (100) zu steuern.

6. Vorrichtung (200) zum Steuern eines Haushaltsgeräts (100), wobei die Vorrichtung die folgenden Merkmale aufweist:
einen ersten Sensor (322), der ausgebildet ist, um eine Bewegung eines sich in einem Erfassungsbereich des ersten Sensors (322) befindlichen Nutzers (500) zu erfassen und ein die Bewegung abbildendes Bewegungssignal (312) bereitzustellen;
einen zweiten Sensor (324), der ausgebildet ist, um einen Abstand zu einem sich in einem Erfassungsbereich des zweiten Sensors (324) befindlichen Nutzers (500) zu erfassen und ein den Abstand abbildendes Abstandssignal (314) bereitzustellen;
eine Einleseeinrichtung (332, 334) zum Einlesen des Bewegungssignals (312) und des Abstandssignals (314); und
eine Bestimmungseinrichtung (300) zum Bestimmen eines Steuersignals (310) zum Steuern einer Funktion des Haushaltsgeräts (100) unter Verwendung des Bewegungssignals (312) und des Abstandssignals (314);
**dadurch gekennzeichnet, dass**
der zweite Sensor (324) ansprechend auf ein Erfassen der Bewegung des Nutzers (500) aktiviert wird.

7. Vorrichtung gemäß Anspruch 6, wobei zum Aktivieren des zweiten Sensors (324) ein Aktivierungssignal von dem ersten Sensor (322) oder von der Bestimmungseinrichtung (300) an den zweiten Sensor (324) bereitgestellt werden.

8. Vorrichtung gemäß Anspruch 6 oder 7, wobei der erste Sensor (322) als ein Infrarotsensor und der zweite Sensor (324) als ein Ultraschallsensor ausgeführt ist.

9. Vorrichtung gemäß einem der Ansprüche 6 bis 8, wobei der zweite Sensor (324) ansprechend auf eine von dem ersten Sensor (322) erfasste Bewegung aus einem Ruhemodus in einen Bereitschaftsmodus versetzt wird, um eine Abstandsmessung zum Erfassen des Abstands zu dem Nutzer (500) durchzuführen, und nach der Abstandsmessung wieder in den Ruhemodus versetzt wird.

## Claims

1. Method for controlling a domestic appliance (100), the method comprising the following steps:
reading in (701) a movement signal (312) and a distance signal (314), the movement signal (312) representing a movement of a user (500) of the domestic appliance (100) detected using a first sensor (322) and the distance signal (314) representing a distance between the user (500) and the domestic appliance (100) detected using a second sensor (324);
determining (703) a control signal (310) for controlling a function of the domestic appliance (100) using the movement signal (312) and the distance signal (314); and
detecting the movement of the user (500) using the first sensor (322) and a step of providing the movement signal (312) representing the movement, and comprising a step of detecting the distance between the user (500) and the domestic appliance (100) using the second sensor (324) and a step of providing the distance signal (314) representing the distance;
**characterised by** activating the second sensor (324) in response to a movement detected in the step of detecting the movement of the user (500).

2. Method according to claim 1, wherein the step of detecting the distance is carried out in response to the step of providing the movement signal (312) representing the movement.

3. Method according to either of the preceding claims, wherein in the step of detecting the movement, an infrared measurement for detecting the movement is performed, and in the step of detecting the distance, an ultrasonic measurement for detecting the distance is performed.

4. Method according to any of the preceding claims, wherein in the step of determining, an evaluation of movement data of the movement signal (312) and distance data of the distance signal (314) is carried out and the control signal (310) is determined using a result of the evaluation.

5. Method according to any of the preceding claims, wherein in the step of determining, the control signal (310) is determined in order to control an operating state, illumination, an appliance sound and/or a closing mechanism of the domestic appliance (100).

6. Device (200) for controlling a domestic appliance (100), the device having the following features:
a first sensor (322) which is designed to detect a movement of a user (500) located in a detection region of the first sensor (322) and to provide a movement signal (312) imaging the movement;
a second sensor (324) which is designed to detect a distance to a user (500) located in a detection region of the second sensor (324) and to provide a distance signal (314) imaging the distance;
a read-in means (332, 334) for reading in the movement signal (312) and the distance signal (314); and
a determining means (300) for determining a control signal (310) for controlling a function of the domestic appliance (100) using the movement signal (312) and the distance signal (314);
**characterised in that** the second sensor (324) is activated in response to detecting the movement of the user (500).

7. Device according to claim 6, wherein an activation signal from the first sensor (322) or from the determining means (300) to the second sensor (324) is provided for activating the second sensor (324).

8. Device according to either claim 6 or claim 7, wherein the first sensor (322) is designed as an infrared sensor and the second sensor (324) is designed as an ultrasonic sensor.

9. Device according to any of claims 6 to 8, wherein the second sensor (324) is set from a sleep mode to a standby mode in response to a movement detected by the first sensor (322) in order to carry out a distance measurement for detecting the distance to the user (500), and returns to the sleep mode after the distance measurement.

## Revendications

1. Procédé de commande d'un appareil ménager (100), le procédé comprenant les étapes suivantes :
lecture (701) d'un signal de mouvement (312) et d'un signal de distance (314), le signal de mouvement (312) représentant un mouvement d'un utilisateur (500) de l'appareil ménager (100), détecté en utilisant un premier capteur (322) et le signal de distance (314) représentant une distance entre l'utilisateur (500) et l'appareil ménager (100), détectée en utilisant un second capteur (324) ;
détermination (703) d'un signal de commande (310) pour commander une fonction de l'appareil ménager (100) en utilisant le signal de mouvement (312) et le signal de distance (314) ; et
détection du mouvement de l'utilisateur (500) en utilisant le premier capteur (322), et une étape de fourniture du signal de mouvement (312) représentant le mouvement, une étape de détection de la distance entre l'utilisateur (500) et l'appareil ménager (100) en utilisant le second capteur (324), et une étape de fourniture du signal de distance (314) représentant la distance ;
**caractérisé par** l'activation du second capteur (324) en réponse à un mouvement détecté à l'étape de détection du mouvement de l'utilisateur (500).

2. Procédé selon la revendication 1, dans lequel l'étape de détection de la distance est effectuée en réponse à l'étape de fourniture du signal de mouvement (312) représentant le mouvement.

3. Procédé selon l'une des revendications précédentes, dans lequel une mesure infrarouge permettant de détecter le mouvement est effectuée à l'étape de détection du mouvement, et une mesure ultrasonique permettant de détecter la distance est effectuée à l'étape de détection de la distance.

4. Procédé selon l'une des revendications précédentes, dans lequel une évaluation des données de mouvement du signal de mouvement (312) et des données de distance du signal de distance (314) est effectuée à l'étape de détermination, et le signal de commande (310) est déterminé en utilisant un résultat de l'évaluation.

5. Procédé selon l'une des revendications précédentes, dans lequel le signal de commande (310) est déterminé à l'étape de détermination pour commander un état de fonctionnement, un éclairage, un son et/ou un mécanisme de fermeture de l'appareil ménager (100).

6. Dispositif (200) de commande d'un appareil ménager (100), le dispositif présentant les caractéristiques suivantes :
un premier capteur (322) conçu pour détecter un mouvement d'un utilisateur (500) se trouvant dans une zone de détection du premier capteur (322) et pour fournir un signal de mouvement (312) représentant le mouvement ;
un second capteur (324) conçu pour détecter une distance par rapport à un utilisateur (500) se trouvant dans une zone de détection du second capteur (324) et pour fournir un signal de distance (314) représentant la distance ;
des moyens de lecture (332, 334) permettant de lire le signal de mouvement (312) et le signal de distance (314) ; et
des moyens de détermination (300) permettant de déterminer un signal de commande (310) pour commander une fonction de l'appareil ménager (100) en utilisant le signal de mouvement (312) et le signal de distance (314) ;
**caractérisé en ce que** le second capteur (324) est activé en réponse à une détection du mouvement de l'utilisateur (500).

7. Dispositif selon la revendication 6, dans lequel, pour activer le second capteur (324), un signal d'activation est fourni audit second capteur (324) par le premier capteur (322) ou par lesdits moyens de détermination (300).

8. Dispositif selon la revendication 6 ou 7, dans lequel le premier capteur (322) est conçu sous la forme d'un capteur infrarouge et le second capteur (324) est conçu sous la forme d'un capteur à ultrasons.

9. Dispositif selon l'une des revendications 6 à 8, dans lequel le second capteur (324) est entraîné d'un mode veille à un mode d'attente en réponse à un mouvement détecté par le premier capteur (322), pour effectuer une mesure de distance permettant de détecter la distance par rapport à l'utilisateur (500), et est remis en mode veille après la mesure de distance.
